(19) Europäisches Patentamt / European Patent Office / Office européen des brevets

(11) **EP 2 784 729 A1**

(12) **EUROPEAN PATENT APPLICATION**

(43) Date of publication:
01.10.2014 Bulletin 2014/40

(51) Int Cl.:
**G06Q 10/04** *(2012.01)*

(21) Application number: **13305366.0**

(22) Date of filing: **25.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Amadeus**
**06410 Biot (FR)**

(72) Inventors:
• **Losco, Philippe**
**06370 Mouans Sartoux (FR)**

• **Rodriguez Palacios, Marcos**
**06530 Peymeinade (FR)**
• **Dubos, Fabienne**
**06620 Le Bar sur Loup (FR)**
• **Morales Aragon, Jose**
**06000 Nice (FR)**

(74) Representative: **Gevers Patents**
**Intellectual Property House**
**Holidaystraat 5**
**1831 Diegem (BE)**

(54) **Method and system for detecting anomaly in passenger flow**

(57)    A method for detecting an anomaly in a passenger flow towards a transport device is disclosed. The method comprising the steps of aggregating historical data relating to said passenger flow and determining a forecast passenger flow value for a target time frame on the basis of said historical data. The method includes computing a first forecast on the basis of the passenger flow in a first set of said time frames directly preceding said target time frame. The method also includes computing a second forecast on the basis of the passenger flow in a second set of said time frames, said second set of time frames having occurred on a same weekday and at a same time as the target time frame, in weeks preceding the target time frame. The method further comprises combining the first and second forecasts.

FIG. 1

**Description**

**Technical field**

The present invention relates to a method and system for detecting an anomaly in a passenger flow towards a transport device.

**Background art**

Airplane departure delays are highly undesirable as such delays add to airline companies' costs and lead to passenger inconvenience. To achieve on-time flight departures, an airline company may use various processes that may include passenger management. To manage passengers, the airline company may use a passenger management application. The passenger management application may assist the airline passengers from check-in through departure. In addition, the passenger management application may keep a track of the passengers relative to various locations such, a check-in point, a security point, and a boarding point. The airline staff can use the tracking information, for example, to contact and assemble a passenger in case of any delay on the passenger part. The current states of art passenger management applications are not configured to anticipate delays due to the passengers. The current passenger management applications do not utilize passenger flow information to determine delays. Delay in departure of the flight due to one or more passengers may have a direct impact on the passenger, airline and the passenger management applications. The delay may cause wastage of time to the passengers, delays in subsequent flights, loss of revenue to the airline companies and degradation in service experience to the passengers.
US6721714 discusses a method and system for managing the assets of an airline. However, this method is used for the purposes of revenue management. The method does not manage passenger flows and avoidance of departure delays due to the passenger flows.

**Summary of the invention**

It is an aim of the present invention to provide a method and system for rapidly detecting an anomaly in a passenger flow towards a transport device, such that departure delays may be avoided or anticipated.
This aim is achieved according to the invention with the method and system as defined in the independent claims.
The invention provides a method for detecting anomalies in a passenger flow towards a transport device, wherein the passenger flow is a number of passengers being handled at a given location (for example, upon check-in or upon boarding) per time frame of N minutes. The transport device may be an airplane, a train, a bus, a ferry, and the like, in particular any transport device that runs according to a schedule. The method comprises the steps of aggregating historical data relating to the passenger flow and determining a forecast passenger flow value for a target time frame on the basis of the historical data. In particular, the forecast passenger flow value is determined by:

A) computing a first forecast on the basis of the passenger flow in a first set of the time frames directly preceding the target time frame;
B) computing a second forecast on the basis of the passenger flow in a second set of the time frames, the second set of time frames having occurred on a same weekday and at a same time as the target time frame, in weeks preceding the target time frame; and
C) combining the first and second forecasts.

It has been found that in order to obtain a forecast rapidly and yet with a satisfactory degree of reliability, a combination of such two types of forecasts is desirable, namely the first forecast computed on the basis of the directly preceding time frames and the second forecast computed on the basis of each time the same time frame of the weeks before.
According to the invention, the passenger flow is considered in blocks of N minutes, with N being preferably at least 1 (60 seconds) and at most 10 (600 seconds), such that anomalies can be detected rapidly. This is not possible with prior art processes in which passenger flows are considered on, for example, a per hour basis. A larger N means that the data which is started from can be more stable but that it takes longer before the anomaly is detected. A smaller N means that the data which is started from can be more unstable but that the anomaly can be detected sooner. The invention can be particularly advantageous in applications for monitoring passenger flows at check-in desks (acceptance) and at boarding locations on airports, since airplane departure delays are highly undesirable.
In one embodiment, first set of time frames comprises three or more time frames that are directly preceding the target time frame. The first forecast may be computed as a rolling moving average of the passenger flow in the three or more time frames of the first set. The rolling moving average of the passenger flow provides a smooth forecast that linearly decreases or increases.

In one embodiment, the second set of time frames comprises three or more time frames that have occurred on the same weekday and at the same time as the target time frame in the weeks preceding the target time frame. The second forecast is computed by exponential smoothing of the passenger flow in the at least three time frames of the second set. The exponential smoothing considers a trend factor in calculation of the forecast.

In one embodiment, the exponential smoothing comprises double exponential smoothing. The double exponential smoothing works well with the time frames having passenger flow data comprising trends.

In one embodiment, the exponential smoothing comprises Holt-Winters double exponential smoothing. The Holt-Winters double exponential smoothing adapts to changes in trends and provides a forecast that is reactive to changes.

In one embodiment, the combination comprises computing a relative error for the first and second forecasts and keeping the forecast with the smaller relative error. Keeping the forecast with the smaller relative error allows the forecast be reactive to the recovery and less sensitive to a potential defect.

In one embodiment, the method comprises a step of raising an alarm if the forecast passenger flow value differs by more than a predetermined threshold from an actual passenger flow in the target time frame. The difference of the forecast passenger flow value by more than the predetermined threshold from the actual passenger flow may indicate an anomaly or an error. In one embodiment, the predetermined threshold is within a range of 30% to 50%.

In one embodiment, the alarm is not raised if the actual passenger flow in the target time frame is below a given minimum. The actual passenger flow in the target time frame being below a given minimum indicates an error in forecasting. In one embodiment, the alarm is only raised if the predetermined threshold is exceeded for a number of consecutive time frames. This reduces false alarms, thereby increasing the reliability of the proposed method. The alarm may be raised to indicate the presence of errors reaching a defined number.

The invention provides a system for detecting an anomaly in a passenger flow towards a transport means, wherein the passenger flow is a number of passengers being handled at a given location per time frame of N minutes. The system comprising an aggregation mechanism configured for aggregating historical data relating to the passenger flow. The system also includes a forecasting mechanism configured for determining a forecast passenger flow value for a target time frame on the basis of the historical data; **characterised in that** the forecasting mechanism is configured for:

A) computing a first forecast on the basis of the passenger flow in a first set of the time frames directly preceding the target time frame;

B) computing a second forecast on the basis of the passenger flow in a second set of the time frames, the second set of time frames having occurred on a same weekday and at a same time as the target time frame, in weeks preceding the target time frame; and

C) determining forecast passenger flow value for the target time frame by combining the first and second forecasts.

It has been found that in order to obtain a forecast rapidly and yet with a satisfactory degree of reliability, a combination of such two types of forecasts is desirable, namely the first forecast computed on the basis of the directly preceding time frames and the second forecast computed on the basis of each time the same time frame of the weeks before.

According to the invention, the passenger flow is considered in blocks of N minutes, with N being preferably at least 1 (60 seconds) and at most 10 (600 seconds), such that anomalies can be detected rapidly. This is not possible with prior art processes in which passenger flows are considered on for example a per hour basis. A larger N means that the data which is started from can be more stable but that it takes longer before the anomaly is detected. A smaller N means that the data which is started from can be more unstable but that the anomaly can be detected sooner. The invention can be particularly advantageous in applications for monitoring passenger flows at check-in desks (acceptance) and at boarding locations on airports, since airplane departure delays are highly undesirable.

In one embodiment, first set of time frames comprises three or more time frames that are directly preceding the target time frame. The first forecast is computed as a rolling moving average of the passenger flow in the three or more time frames of the first set. The rolling moving average of the passenger flow provides a smooth forecast that linearly decreases or increases.

In one embodiment, the second set of time frames comprises three or more time frames that have occurred on the same weekday and at the same time as the target time frame in the weeks preceding the target time frame. The second forecast is computed by exponential smoothing of the passenger flow in the at least three time frames of the second set. The exponential smoothing considers a trend factor in calculation of the forecast.

In one embodiment, the exponential smoothing comprises double exponential smoothing. The double exponential smoothing works well with the time frames having passenger flow data comprising trends.

In one embodiment, the exponential smoothing comprises Holt-Winters double exponential smoothing. The Holt-Winters double exponential smoothing adapts to changes in trends and provides a forecast that is reactive to changes.

In one embodiment, the forecasting mechanism is configured to determine said forecast passenger flow value by computing a relative error for the first and second forecasts and keeping the forecast with the smaller relative error. Keeping the forecast with the smaller relative error allows the forecast be reactive to the recovery and less sensitive to a potential defect.

In one embodiment, the system comprises an alarming mechanism configured for raising an alarm if the forecast passenger flow value differs by more than a predetermined threshold from an actual passenger flow in the target time frame. The difference of the forecast passenger flow value by more than the predetermined threshold from the actual passenger flow may indicate an anomaly or an error. In one embodiment, the predetermined threshold is within a range of 30% to 50%.

In one embodiment, the alarm is not raised if the actual passenger flow in the target time frame is below a given minimum. The actual passenger flow in the target time frame being below a given minimum indicates an error in forecasting. In one embodiment, the alarm is only raised if the predetermined threshold is exceeded for a number of consecutive time frames. The alarm may be raised to indicate the presence of errors reaching a defined number.

## Brief description of the drawings

The invention will be further elucidated by means of the following description and the appended figures.

Figure 1 shows a system that detects an anomaly in a passenger flow towards a transport device, according to an embodiment of the present disclosure.

Figure 2 shows an exemplary forecasting engine, according to an embodiment of the present disclosure.

Figure 3 shows an exemplary monitoring unit, according to an embodiment of the present disclosure.

Figure 4 shows a plot of relative error versus time generated as a result of moving average technique, according to an embodiment of the present disclosure.

Figure 5 shows a plot of relative error for various values of data smoothing factor ($\alpha$) and trend smoothing factor ($\gamma$), according to an embodiment of the present disclosure.

Figure 6 shows a plot of relative error versus time generated as a result of Holt-Winters double exponential smoothing technique, according to an embodiment of the present disclosure.

Figure 7 shows a plot of relative error versus time without relative errors below 50%, according to an embodiment of the present disclosure.

Figure 8 shows a plot of relative error versus time as a result of application of latency and reduction in threshold to 40%, according to an embodiment of the present disclosure.

Figure 9 shows a plot of relative error versus time as a result of application of latency and reduction in threshold to 30%, according to an embodiment of the present disclosure.

Figure 10 shows a plot of forecasts for passenger flows for time frames, according to an embodiment of the present disclosure.

## Modes for carrying out the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

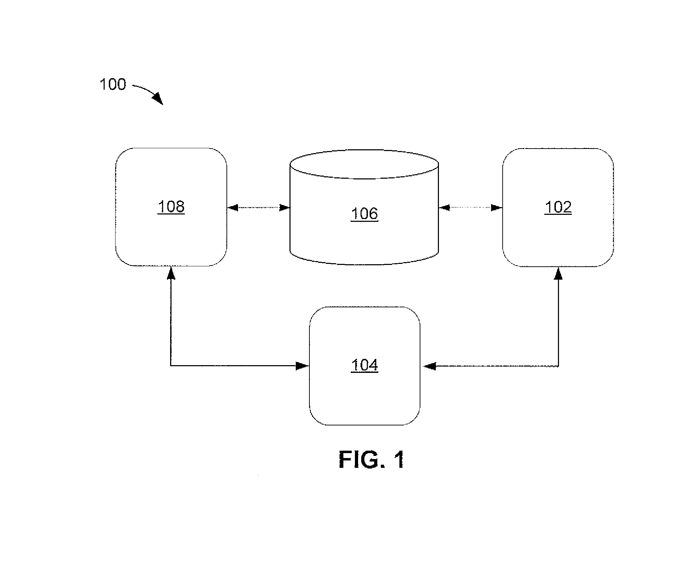

Referring to figure 1; a system 100 detects an anomaly in a passenger flow towards a transport device. The passenger flow as described herein may refer to a number of passengers being handled at a given location per time frame of 'N' minutes, wherein N may be but does not have to be a whole number. The system 100 includes a forecasting engine 102, a monitoring unit 104, a passenger flow database 106 and a passenger management application 108.

The forecasting engine 102 computes a forecast passenger flow value for a target time frame on the basis of a historical data. The historical data may include records of passenger flow at a given location, at a given month/week/day, at a given hour, and so forth. The forecasting engine 102 may compute the forecast passenger flow value using one or more forecasting techniques. The forecasting engine 102 may utilize passenger flow information in time frames not having trends or comprising trends or a combination of both to compute the forecast passenger flow value. The forecasting engine 102 may use techniques such as, for example, moving average technique, weighted average technique, double exponential smoothing technique, Holt-Winters double exponential smoothing technique, combination of the aforementioned techniques or any other technique suitable for computing the forecast passenger flow value.

The monitoring unit 104 receives the forecast passenger flow value from the forecasting engine 102. The monitoring unit 104 monitors actual passenger flow in the target time frame. The monitoring unit 104 compares the forecast passenger flow value with the actual passenger flow for the target time frame. In response to detection of the forecast passenger flow value differing by more than a predetermined threshold from the actual passenger flow, the monitoring unit 104 may generate an alarm. In an embodiment, the monitoring unit 104 may be capable of detecting an anomaly and/or an error in a process of comparison. The monitoring unit 104 may raise an alarm in response detection of the anomaly.

The forecasting engine 102 may retrieve the historical data from the passenger flow database 106. The passenger flow database 106 aggregates the historical data relating to the passenger flow. The passenger flow database 106 receives the passenger flow information from the passenger management application 108. The passenger flow database 106 may group and aggregate the passenger flow data per interval equivalent to duration of time frame. For example, the passenger flow database 106 may aggregate the passenger flow data per interval of N minutes, e.g. 5 minutes. Alternatively, the passenger flow database 106 may aggregate the passenger flow data in any other interval or without any interval. The passenger flow database 106 may also consider daylight saving time while aggregating and may realign the aggregate according to a reference time.

The passenger management application 108 manages the passenger flow process in the system 100. An example of the passenger management application 108 includes a passenger departure control system that assists passengers and airline staff from check-in to departure including baggage management, boarding management, and the like.

The forecasting engine 102 and the monitoring unit 104, each may be a standalone application or a modular application (for example, a plugin) that can be integrated with other applications such as the passenger management application 108. In an embodiment, the forecasting engine 102 and the monitoring unit 104 may be a part of the passenger management application 108. The forecasting engine 102 and the monitoring unit 104 may communicate with each other and other applications through, for example, Application Programming Interfaces (API).

The forecasting engine 102, the monitoring unit 104, and/or the passenger management application 108 may be a computer-based system such as, for example, a server, any suitable personal computer, or the like. In another embodiment, the forecasting engine 102, the monitoring unit 104, and/or the passenger management application 108 may be application components that can be implemented in other computer-based systems. The forecasting engine 102, the monitoring unit 104, and/or the passenger management application 108 may be components made of hardware, software, or hardware and software that can be implemented in or in conjunction with the computer-based systems. Those skilled in art can appreciate that computer-based system includes an operating system and various support software associated with server/computer. The forecasting engine 102, the monitoring unit 104, and/or the passenger management application 108 as described herein may be deployed by an organization, such as, a company managing the transport device and/or a third-party associated with the organization.

The forecasting engine 102, the monitoring unit 104, and/or the passenger management application 108 may be implemented as a set of computer related instructions that when loaded onto a computing device produces a machine, for implementing the functions described herein. These computer program instructions may also be stored in a computer-readable memory that can direct a computer or other programmable data processing apparatus to function in a manner described.

The passenger flow database 106 may be any type of database, such as relational, hierarchical, graphical, object-oriented, and/or other database configurations. The forecasting engine 102, the monitoring unit 104, the passenger flow database 106 and the passenger management application 108 may be communicate with each other through a network. Network as discussed may a wide area network (WAN), a local area network (LAN), an Ethernet, Internet, an Intranet, a cellular network, a satellite network, or any other suitable network for communication.

The system 100 as described herein may be implemented for monitoring passenger flows at airports, bus stations, railway stations, shipping yards and the like. The system 100 is particularly useful in applications for monitoring passenger flows at check-in desks (acceptance) and at boarding locations on airports, since airplane departure delays are undesirable.

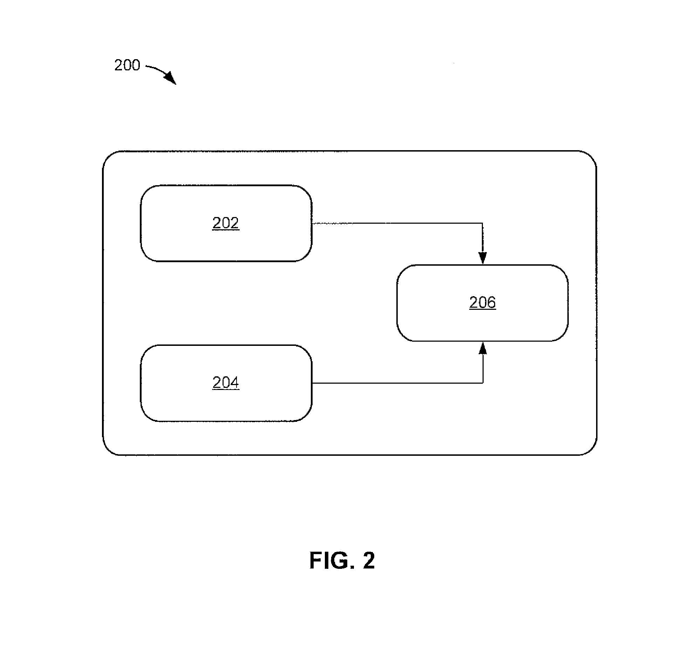

Figure 2 is an exemplary forecasting engine 200, in accordance with an embodiment of the present disclosure. The forecasting engine 200 generates the forecast passenger flow value based on passenger flow information in time frames from the historical data. Length of the time frame is a design parameter and may be set depending upon requirements of the organization implementing the system 100. For example, a longer time frame results in a more stable forecasted passenger flow value. On the other hand, a shorter time frame allows the forecasted passenger flow value to follow actual passenger flow values more quickly. In an embodiment, the minimum duration N of a time frame may be one (1) minute or sixty (60) seconds. The maximum length N of the time frame may be ten (10) minutes or six hundred (600) seconds. In an embodiment, the time frame may be set to five (5) minutes. Alternatively, time frames can be defined in seconds, hours or any other time unit.

The forecasting engine 200 includes a first forecast module 202, a second forecast module 204, and a processing module 206. The first forecast module 202 computes a first forecast on the basis of the passenger flow in a set of time frames directly preceding the target time frame. In an embodiment, the first forecast module 202 may consider time frames closer to the target time frame as there is less likelihood of trend in the passenger flow. In an embodiment, the first forecast module 202 utilizes a moving average technique to compute the first forecast. For example, the first forecast module 202 may utilize passenger flow information in three time frames directly preceding the target time frame to compute the forecast. Alternatively, the first forecast module 202 may also consider more than three time frames for computing the forecast. For a given time frame '$t$' and week '$W_1$', the first forecast $\hat{y}_{w_1 t}$ based on moving average technique can be computed as:

$$\hat{y}_{w_1 t} = \sum y_{w_1 t - n} / n \; ; \text{ ----- 1}$$

where '$n$' is total number of frames and $y_{w_1 t}$ is passenger flow at a corresponding the time frame. For a time frame '$t$' and week '$W_1$', the forecast $\hat{y}_{w_1 t}$ based on three time frames directly preceding the target time frame is given by:

$$\hat{y}_{w_1 t} = \frac{y_{w_1 t - 1} + y_{w_1 t - 2} + y_{w_1 t - 3}}{3} \; ; \text{ -----2}$$

where $y_{w_1 t-1}$ is passenger flow value at time frame '$t$-$1$'; $y_{w_1 t-2}$ is passenger flow value at time frame '$t$-$2$'; and $y_{w_1 t-3}$ is passenger flow value at time frame '$t$-$3$'.

The first forecast module 202 may also compute the first forecast using an alternate technique such as weighted average technique, where weightage provided to time frames closer to the target time frame may be comparatively more than a weightage provided to time frames farther to the target time frame. In another alternative, the first forecast module 202 may compute the first forecast using a double exponential smoothing technique. Other alternative techniques for computing the forecast are also contemplated herein.

The second forecast module 204 may compute a second forecast on the basis of the passenger flow in a set of time frames having occurred on a same weekday and at a same time as the target time frame, in weeks preceding the target time frame. In an example, the set of time frames may include three or more time frames having occurred on a same weekday and at a same time as the target time frame, in weeks preceding the target time frame. The second forecast module 204 may consider trends in the passenger flow data. The time frames representing the same time and the same day of the week as the target time frame, in weeks preceding the target time frame may show a trend. The second forecast module 204 may utilize the trend factor in calculation of the second forecast. In an embodiment, the second forecast module 204 utilizes a double exponential smoothing technique. For a given pair time frame '$t$' and week '$W_1$', the double exponential smoothing is provided by:

$$b_{w_1 t} = 2L_{1 w_1 t} - L_{2 w_1 t}$$

$$a_{w_1 t} = \frac{\propto}{1 - \propto}(L_{1 w_1 t} - L_{2 w_1 t})$$

$$\hat{y}_{w_1 t} = a_{w-1,t} - b_{w-1,t} \ \text{-----} \ 3$$

Where '$L_{1t}$' is the first exponential smoothing and '$L_{2t}$' is the second exponential smoothing, '$a_{w_1 t}$' is an estimated level and '$b_{w_1 t}$' is an estimated trend at time '$t$'. Parameter '$\propto$' is a data smoothing factor. The second forecast module 204 may use a general case of the double exponential smoothing such as a Holt-Winters exponential smoothing technique to generate forecast. Other exponential smoothing techniques may also be used to compute the second forecast. The second forecast module 204 may apply two (2) simple exponential smoothing. The second forecast module 204 may consider an integer '$\gamma$' with value between 0 and 1. The parameter '$\gamma$' is a trend smoothing factor. '$\gamma$' and '$\gamma$-1' may represent a weight of the barycentre of the two computed values. The estimated value is computed for a given pair timeframe $t$ and week $W$ by:

$$b_{w_1 t} = \propto y_{w_1 t} + (1 - \propto)(b_{w-1,t} + a_{w-1,t})$$

$$a_{w_1 t} = \gamma(b_{w_1 t} + b_{w-1,t}) + (1 - \gamma) a_{w-1,t}$$

$$\hat{y}_{w_1 t} = a_{w-1,t} - b_{w-1,t} \ \text{-----} 4$$

The second forecast module 204 may compute the parameters '$\propto$' and '$\gamma$' to adapt the algorithm to the data. For example, these parameters may be set according to the airline, the airport, season of the year and/or other suitable factors.

The processing module 206 may combine the forecasts generated by the first forecast module 202 and the second forecast module 204 to generate the forecast passenger flow value for the target time frame. In one example, the processing module 206 may compute a relative error for the first and the second forecast passenger flow value and keep the forecast with the smaller relative error. Although an example for combining the forecasts is provided, one should appreciate that other techniques to combine the forecasts are contemplated herein.

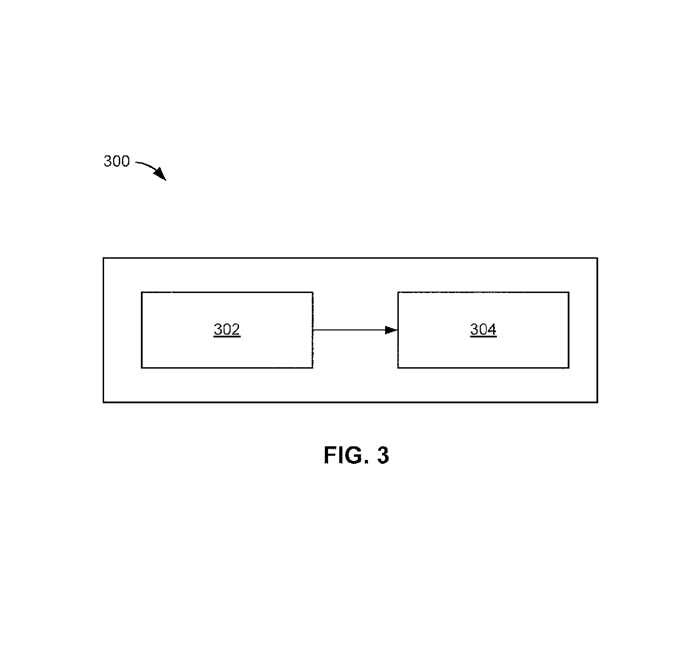

Figure 3 is an exemplary monitoring unit 300, in accordance with an embodiment of the present disclosure. Figure 3 includes a compare module 302, and a notification module 304.

The compare module 302 receives the forecast passenger flow value from the forecasting engine 102 for a given target time frame. The compare module 302 also receives the actual passenger flow from the passenger management application 108 for the target time frame. The compare module 302 compares the forecast passenger flow value with the actual passenger flow for the target time frame. The compare module 302 may determine a presence of an anomaly or an error when the forecast passenger flow value differs by more than a predetermined threshold from the actual passenger flow in the target time frame. The predetermined threshold may be defined in terms of percentage. The compare module 302 may determine the presence of the anomaly when percentage of the forecast passenger flow value is lesser than the predetermined threshold from the actual passenger flow. The compare module 302 may determine the presence of an error when the actual passenger flow is given below a minimum.

In response to detection of the anomaly, the notification module 304 generates an alarm. For example, if the actual passenger flow is greater than the predetermined threshold from the forecast passenger flow value passenger flow, the compare module 302 may cause an alarm. In an example, the predetermined threshold may be set within a range of 30% to 50% from the actual passenger flow. In other examples, the predetermined threshold may be customized to other values. The notification module 304 may communicate the notifications indicating anomaly in the passenger flow towards a transport device. The alarm may be a visual alarm, an audible alarm, a message, an email, a pop-up on a user interface and the like.

In some embodiments, the compare module 302 may include a mechanism where when the forecast passenger flow value is below a given minimum, the compare module 302 may ignore such forecast passenger flow values. In such cases, no alarm is generated even if the difference between the forecast passenger flow value and the actual passenger flow value is greater than the predetermined threshold. This mechanism reduces false alarms caused due to low base value when computing the percentage difference. In further embodiments, the notification module 304 may generate an alarm only when the difference between the forecast passenger flow value and the actual passenger flow values exceed the predetermined threshold for a number of consecutive time frames. This further improves the robustness of the system 100 and reduces chances of false alarms.

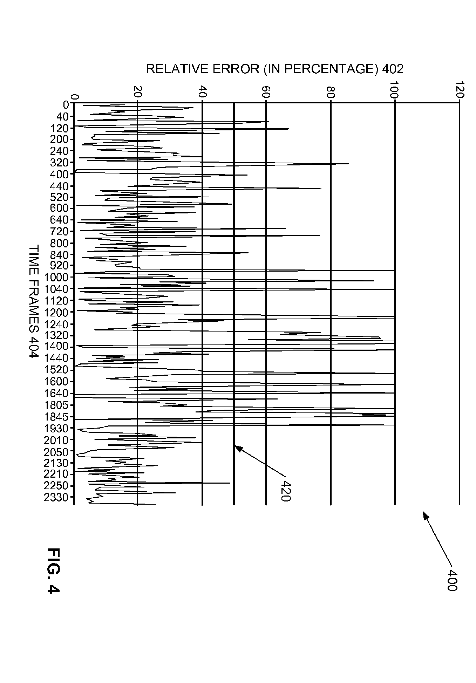

Figures 4-10 describe an example anomaly detection process in passenger management for an airline in an airport, in accordance with an embodiment of the present disclosure. In the current example, passenger flows at boarding are considered. The techniques are equally applicable to monitor passenger flows at check-in. The forecasting engine 102 computes two forecasts. The forecasting engine 102 computes a first forecast using time frames directly preceding the target time frame. The forecasting engine 102 computes the second forecast using passenger flow in time frames having occurred on a same weekday and at a same time as the target time frame, in weeks preceding the target time frame. The forecasting engine 102 also generates the forecast passenger flow value by combining the first forecast and the second forecast. The monitoring unit 104 evaluates the combined forecasts using the actual passenger flow at the target time and generates alarms appropriately.

In an example, the forecasting engine 102 may use a rolling moving average technique to compute the first forecast for the target time using passenger flow data in the three time frames directly preceding the target time frame. The monitoring unit 104 may compare the actual passenger flow with the first forecast at the target time frame. Frame size is 5 minutes in the current example. A plot 400 of the relative error versus time is illustrated in figure 4. Figure 4 shows the relative error 402 (in percentage) due to the first forecast at different time frames (404). The predetermined threshold 420 (50% in this example) is also shown. As seen in figure 4, there are multiple instances where the relative error due to the first forecast exceeds the predetermined threshold of 50%. Such instances may raise likelihood of false alarms.

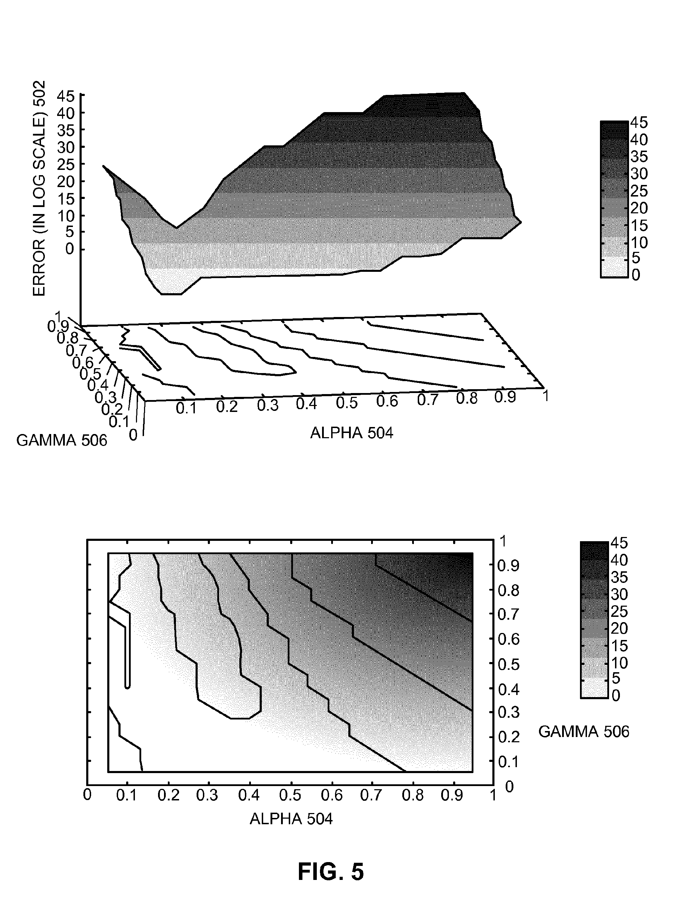

The forecasting engine 102 may use a Holt-Winters double exponential technique to compute the second forecast for the target time using passenger flow in time frames having occurred on a same weekday and at a same time as the target time frame, in weeks preceding the target time frame. Historical data for one year preceding the target time frame may be considered for computing the second forecast. The forecasting engine 102 may compute the alpha ($\propto$) and gamma ($\gamma$) of equation 4 to generate the second forecast. The second forecast module 204 may choose a pair alpha ($\propto$) and gamma ($\gamma$) that minimizes a relative error between the computed second forecast and the actual passenger values. Figure 5 shows a plot 500 illustrating relative error values (502) for different values of alpha (504) and gamma (506).

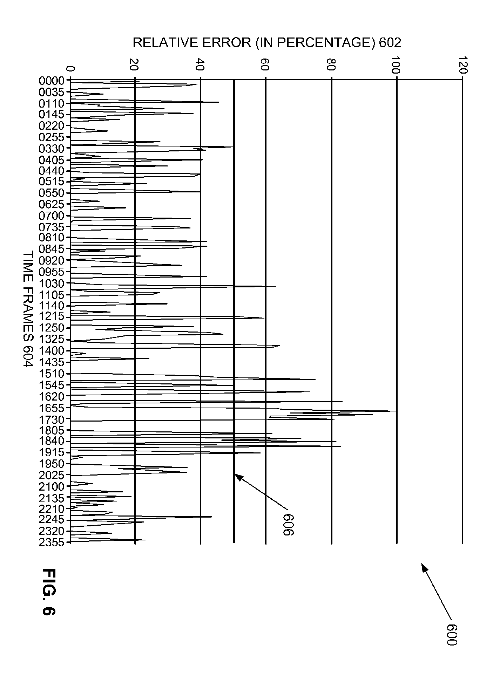

A plot 600 of figure 6 illustrates relative error values (602, represented in percentage) of the second forecast from the actual passenger flow at different time frames (604). The predetermined threshold 606 was kept at 50%. While reducing the number of false alarms as compared to the first forecast, there were still a few instances of false alarms.

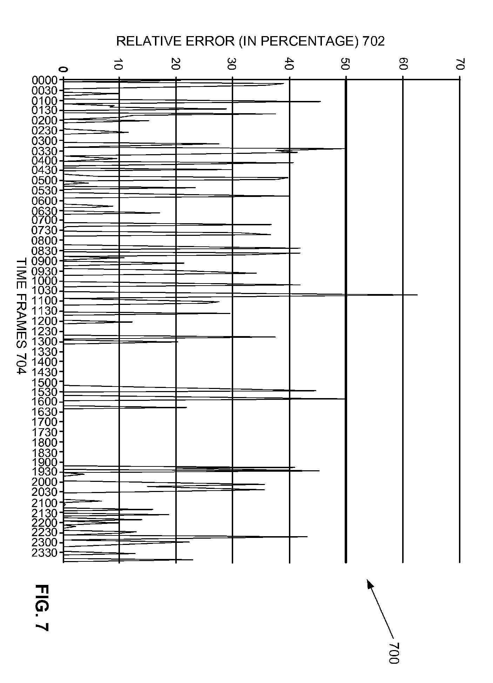

It was observed that a number of false alarms for the second forecast were at time frames where the absolute number of passengers was low, thereby leading to higher percentage relative error even for small difference values between the forecast value and the actual value of passenger flow. To avoid such false alarms, the system 100 may ignore forecast passenger values that are below a predetermined threshold, for example, 50 passengers. A plot of relative errors as a result of such filtering is illustrated in figure 7. The plot 700 shows percentage relative error (702) of the second forecast plotted against time frames (704).

Latency may be introduced to decrease the predetermined threshold to less than 50% and to decrease the false positive alarms. In the current example, alarm may be raised only when the relative error of the second forecast exceeds the predetermined threshold for two (2) consecutive time frames. The trade-off of using the latency is that alarm may not be raised immediately, but raised with a delay of 2N minutes (when the latency of two time frames is used).

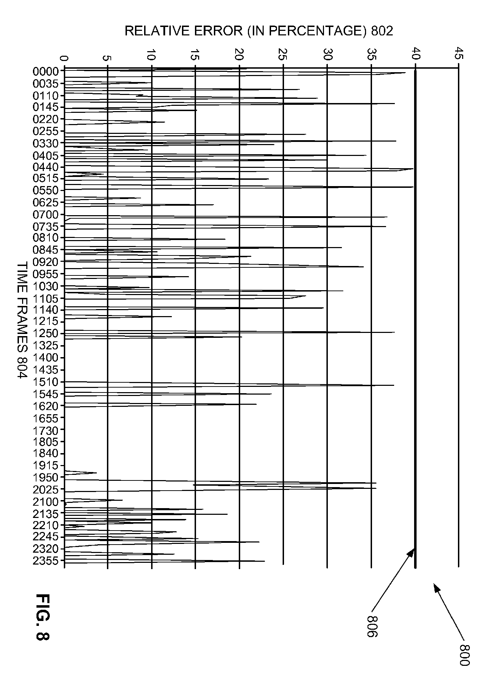

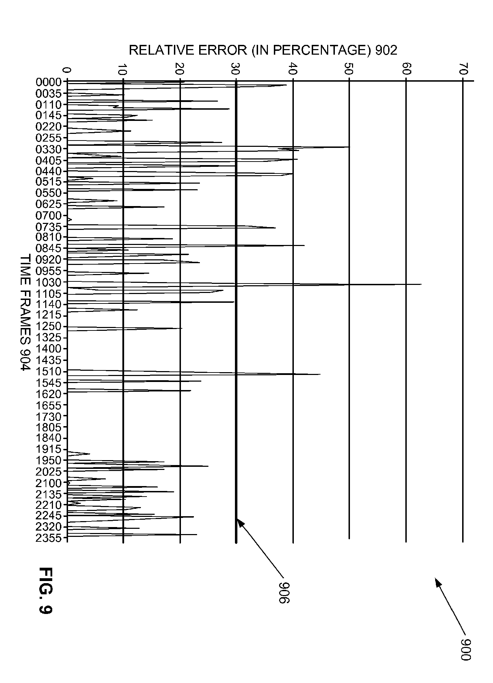

Figure 8 illustrates a plot 800 of relative error 802 versus time frames 804 for the predetermined threshold 806 reduced to 40% and the latency of two frames. Figure 9 illustrates a similar plot 900 of relative error 902 versus time 904 with the predetermined threshold further reduced to 30%. The latency is kept the same.

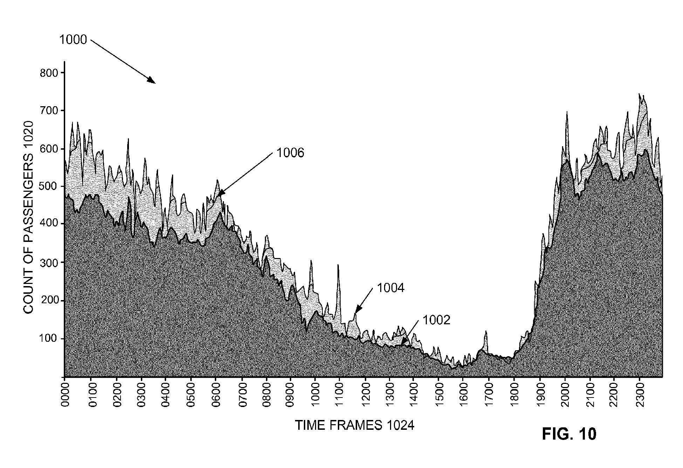

The forecasting engine 102 generates the forecast passenger flow value by combining the first forecast and the second forecast for the target time frame. The combination also includes computing a relative error for the first and second forecasts and keeping the forecast with the smaller relative error. Figure 10 illustrates a plot 1000 of the first forecast 1002, the second forecast 1004 and the optimized forecast 1006 generated by combining the first forecast 1002 and the second forecast 1004. The rolling moving average technique provides a smooth forecast that decreases and increases slowly. The Holt-Winters technique provides a forecast that is highly reactive to changes. The combination of the rolling average technique and the Holt-Winters double exponential smoothing technique provides a forecast that is reactive to recovery and slightly sensible to a defect.

The optimized value that is used is, for a given interval, the value between the real value or the rolling moving average that best approximates to the forecasted value, i.e., the one with minimum relative error to the forecasted value.

So in some cases the optimized value will correspond to the real value, and in some cases it will correspond to the rolling moving average. A reason for this approach, is that taking the minimum relative error from the real value or the rolling moving average to the forecasted value means that the system is less sensitive to partial drop downs (rolling moving average drops slower than real value) but more sensitive to recoveries (real values climbs up faster than rolling moving average). The inventors have found that this is particularly effective for monitoring passenger flows at such a little interval of five minutes, as it adds the daily trend dimension over the real measured values.

Although, the above example is discussed for the passenger flow at boarding, one should appreciate that the technique described above can be used for the passenger flows at check-in, a combination of the two.

The system and method disclosed in the present disclosure may be implemented or used in transport sectors such as, but not limited to, airports, train stations, bus stations, and shipping. The system and method include computing a first forecast on the basis of the passenger flow in a first set of said time frames directly preceding said target time frame. The system and method may further include computing a second forecast on the basis of the passenger flow in a second set of said time frames. The second set of time frames having occurred on a same weekday and at a same time as the target time frame, in weeks preceding the target time frame. The system and method include combining the first and second forecasts.

## Claims

1. Method for detecting an anomaly in a passenger flow towards a transport device, wherein said passenger flow is a number of passengers being handled at a given location per time frame of N minutes, the method comprising the steps of aggregating historical data relating to said passenger flow and determining a forecast passenger flow value for a target time frame on the basis of said historical data; **characterised in that** said forecast passenger flow value is determined by:

   A) computing a first forecast on the basis of the passenger flow in a first set of said time frames directly preceding said target time frame;
   B) computing a second forecast on the basis of the passenger flow in a second set of said time frames, said second set of time frames having occurred on a same weekday and at a same time as the target time frame, in weeks preceding the target time frame; and
   C) combining the first and second forecasts.

2. The method of claim 1, wherein said first set of time frames comprises at least three time frames that are directly preceding said target time frame and wherein said first forecast is computed as a rolling moving average of the passenger flow in said at least three time frames of said first set.

3. The method of claim 1 or 2, wherein said second set of time frames comprises at least three time frames that have occurred on the same weekday and at the same time as the target time frame in the weeks preceding the target time frame and wherein said second forecast is computed by exponential smoothing, preferably double exponential smoothing, more preferably Holt-Winters double exponential smoothing, of the passenger flow in said at least three time frames of said second set.

4. The method of any one of the preceding claims, wherein said combination comprises computing a relative error for the first and second forecasts and keeping the forecast with the smaller relative error.

5. The method of any one of the preceding claims, wherein N is at most 10 minutes, i.e. 600 seconds and/or N is at least 1 minute, i.e. 60 seconds.

6. The method of any one of the preceding claims, further comprising the step of raising an alarm if the forecast passenger flow value differs by more than a predetermined threshold from an actual passenger flow in said target time frame, wherein said predetermined threshold is preferably within a range of 30 to 50%.

7. The method of claim 6, wherein said alarm is not raised if the actual passenger flow in said target time frame is below a given minimum.

8. The method of any one of the claims 6-7, wherein said alarm is only raised if said predetermined threshold is exceeded for a number of consecutive time frames.

9. A system for detecting an anomaly in a passenger flow towards a transport means, wherein said passenger flow is a number of passengers being handled at a given location per time frame of N minutes, the system comprising an aggregation mechanism configured for aggregating historical data relating to said passenger flow and a forecasting mechanism configured for determining a forecast passenger flow value for a target time frame on the basis of said historical data; **characterised in that** said forecasting mechanism is configured for:

A) computing a first forecast on the basis of the passenger flow in a first set of said time frames directly preceding said target time frame;
B) computing a second forecast on the basis of the passenger flow in a second set of said time frames, said second set of time frames having occurred on a same weekday and at a same time as the target time frame, in weeks preceding the target time frame; and
C) determining forecast passenger flow value for the target time frame by combining the first and second forecasts.

10. The system of claim 9, wherein said first set of time frames comprises at least three time frames that are directly preceding said target time frame and wherein said forecasting mechanism is configured for computing said first forecast as a rolling moving average of the passenger flow in said at least three time frames of said first set.

11. The system of claim 9 or 10, wherein said second set of time frames comprises at least three time frames that have occurred on the same weekday and at the same time as the target time frame in the weeks preceding the target time frame and wherein said forecasting mechanism is configured for computing said second forecast by exponential smoothing, preferably double exponential smoothing, more preferably Holt-Winters double exponential smoothing, of the passenger flow in said at least three time frames of said second set.

12. The system of any one of the claims 9-11, wherein said forecasting mechanism is configured for determining said forecast passenger flow value by computing a relative error for the first and second forecasts and keeping the forecast with the smaller relative error.

13. The system of any one of the claims 9-12, wherein N is at most 10 minutes, i.e. 600 seconds and/or N is at least 1 minute, i.e. 60 seconds.

14. The system of any one of the claims 9-13, further comprising an alarming mechanism configured for raising an alarm if the forecast passenger flow value differs by more than a predetermined threshold from an actual passenger flow in said target time frame, wherein the predetermined threshold is preferably within a range of 30 to 50%.

15. The system of claim 14, wherein said alarm is not raised if the actual passenger flow in said target time frame is below a given minimum.

16. The system of any one of the claims 14-15, wherein said alarm is only raised if said predetermined threshold is exceeded for a number of consecutive time frames.

100

108 ⟷ 106 ⟷ 102

104

FIG. 1

200

**FIG. 2**

300

**FIG. 3**

FIG. 4

**FIG. 5**

**FIG. 6**

FIG. 7

FIG. 8

FIG. 9

FIG. 10

Europäisches
Patentamt

European
Patent Office

Office européen
des brevets

# EUROPEAN SEARCH REPORT

Application Number

EP 13 30 5366

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MAN-CHUN TAN ET AL: "An Aggregation Approach to Short-Term Traffic Flow Prediction", IEEE TRANSACTIONS ON INTELLIGENT TRANSPORTATION SYSTEMS, IEEE, PISCATAWAY, NJ, USA, vol. 10, no. 1, 1 March 2009 (2009-03-01), pages 60-69, XP011347165, ISSN: 1524-9050, DOI: 10.1109/TITS.2008.2011693 * the whole document * | 1-16 | INV. G06Q10/04 |
| X | US 7 987 106 B1 (AYKIN TURGUT [US]) 26 July 2011 (2011-07-26) * the whole document * | 1-16 | |

TECHNICAL FIELDS
SEARCHED      (IPC)

G06Q

The present search report has been drawn up for all claims

| Place of search | Date of completion of the search | Examiner |
|---|---|---|
| The Hague | 6 September 2013 | Moser, Raimund |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT**
**ON EUROPEAN PATENT APPLICATION NO.**                    EP 13 30 5366

This annex lists the patent family members relating to the patent documents cited in  the above-mentioned European search report.
The members are as contained in the European Patent Office EDP file on
The European Patent Office is in no way liable for these particulars which are merely given for the purpose of information.

06-09-2013

| Patent document cited in search report | Publication date | Patent family member(s) | Publication date |
|---|---|---|---|
| US 7987106              B1 | 26-07-2011 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   US 6721714 B